# EUROPEAN PATENT SPECIFICATION

(11) **EP 2 818 779 B1**
(45) Date of publication and mention of the grant of the patent: **31.08.2016**
(21) Application number: 13173878.3
(22) Date of filing: 26.06.2013
(51) Int. Cl.: F16K 31/40, F16F 1/04

(54) **Solenoid valve**
Magnetventil
Vanne à solénoïde

(43) Date of publication of application: 31.12.2014
(73) Proprietor: Danfoss A/S, 6430 Nordborg (DK)
(72) Inventor: Mortensen, Ole, 6000 Kolding (DK); Birkelund, Michael, 5500 Middelfart (DK); Christensen,Ole Holst, 6000 Kolding (DK); Gretarsson, Kristjan Arnor, 6000 Kolding (DK); Pedersen, Anders, 5500 Middelfart (DK)
(74) Representative: Knoblauch, Andreas

(56) References cited:
- EP-A2- 1 235 014
- WO-A2-2011/127031
- DE-A1- 19 948 446
- US-A- 6 076 550
- US-A1- 2002 063 228
- US-A1- 2008 042 086

## Description

The invention relates to a solenoid valve comprising a housing having an inlet and an outlet, wherein the solenoid valve further comprises a valve element and an orifice, wherein the orifice comprises an orifice inlet and an orifice outlet, and wherein the orifice is provided in a membrane.

Solenoid valves are a known type of electronically operated valves. Solenoid valves are often used to control the flow of fluids or gases. Solenoid valves are either constructed as normally open or normally closed, depending on the preferred valve position. A solenoid valve is operated by opening or closing an orifice in a valve housing to permit or prevent the flow of a fluid or a gas through the valve. A magnetic coil is provided with electrical energy to move a slideable valve member interacting directly or indirectly with the valve element to open or close the valve.

In a normally closed valve, the valve element is often maintained against the valve seat by a return spring, preventing flow through the solenoid valve when electric current is not provided to the solenoid valve.

A solenoid valve of the above mentioned kind is known from US 6 076 550 A. Therein a piloted solenoid valve is disclosed, comprising a membrane provided with an orifice as well as a bleed hole with a pin. The orifice connects a servo chamber with the outlet, while the bleed hole connects the servo chamber with the inlet. When the solenoid valve is provided with a current, the orifice is opened and the membrane is lifted by the pressure differences between inlet, outlet and servo chamber, which opens the main valve hole.

A further solenoid valve is for example known from US 2005/0126218 A1. A shut-off valve for an expansion valve in refrigerating systems is disclosed. A slideable valve member is forced by a spring towards a closing position of the solenoid valve. The expansion valve furthermore comprises a pressure regulating valve with an orifice plate. Different types of possible orifices for the orifice plate are disclosed to adjust the flow characteristics from the inlet to the outlet.

DE 199 48 446 A1 shows a progressive spring for a pump valve in a break system. The spring comprises several sections with a different pitch whereby the effective spring constant varies depending on the compression of the spring.

US 2008 / 00 42 086 A1 discloses a directly operated solenoid valve using two springs, arranged inside a valve member. In the de-energized state the valve is closed by the springs forcing a valve element, which is arranged inside the valve member, against the, valve seat. When the solenoid is provided with a current the valve member moves away from the valve seat and, after traveling a short distance, lifts the valve element from the valve seat.

From US 2002 / 00 63 228 A1 an evaporative control valve for a vehicle is known. The control valve is a directly operated solenoid valve. A rear port comprising the outlet of the valve has a varying diameter.

WO 2011/127031 A2 shows a dispensing assembly with a shut off valve. A first valve comprises an orifice provided in a membrane. The first valve may be a solenoid valve. The orifice has a conical shape.

EP 1 235 014 A2 discloses a further solenoid valve. The solenoid valve comprises an orifice with several converging and diverging conical sections. A diverging conical orifice section extends over most of the length of the orifice and has an opening angle of 11,72° to 19,52°.

Solenoid valves of the above mentioned type have the problem of only being operated reliably when a maximum pressure difference between the inlet and the outlet pressures of the valve is not exceeded. Directly operated solenoid valves must often have a large maximum operating pressure differential of the solenoid valve to allow for a broad range of uses for the valve.

For directly operated solenoid valves, the main orifice is the only flow path through the valve. Directly operated solenoid valves are used in systems where either low flow capacities are sufficient or if the maximum operating pressure differential between the inlet and the outlet pressures of the valve are low. If the pressure differential between the inlet and the outlet is too large, directly operated solenoid valves cannot be operated reliably. The pressure acting on the valve member or the valve element may become too large to allow a controlled opening or closing of the solenoid valve, resulting in the valve element either not being displaced or displacement of the valve element requiring much force and possibly resulting in damage to the valve.

Problems mentioned above are less severe with piloted solenoid valves, wherein the solenoid valve allows or prevents fluid connections between different chambers of the valve. The main flow connection between inlet and outlet is only opened, if a minimum operating pressure differential between the inlet and the outlet is present, even if the solenoid valve is open.

The task of the present invention is to provide a solenoid valve with a large maximum operating pressure differential between inlet and outlet pressures of the valve.

According to the invention, the above mentioned task is solved in that the orifice has a diffuser characteristic in a direction from the orifice inlet to the orifice outlet, and wherein the orifice comprises at least one conical orifice section, and wherein the conical orifice section extends over most of the length of the orifice, and wherein the walls of the conical orifice section are inclined relative to a central axis of the orifice by less than 10°.

Using an orifice with a diffuser characteristic allows to maintain a high pressure difference between the orifice inlet and the orifice outlet. The maximum operating pressure differential between the inlet pressure and the outlet pressure of the solenoid valve may be increased as compared to the state of the art. The orifice is furthermore provided in a membrane, and the higher pressure difference between the orifice inlet and the orifice outlet results in an increased pressure difference on both sides of the membrane. An increased pressure difference on both sides of the membrane may be used to change the opening operation of the valve. In particular, changing the opening operation of the valve will ensure that at least a minimum pressure difference between both sides of the membrane is present at all times. A minimum operating pressure differential necessary for a controlled opening and closing of the valve may also be maintained more easily. Furthermore, the orifice comprises at least one conical orifice section resulting in the orifice having a diffuser characteristic in a flow direction from an orifice inlet to an achieved by increasing the flow speed as compared to an orifice with a substantially cylindrical shape. The conical orifice section extends over most of the length L of the orifice. The walls of the conical orifice section are inclined relative to a central axis of the orifice by an angle of less than 10°.

In a preferred embodiment, the cross-sectional area of the orifice inlet is smaller than the cross-sectional area of the orifice outlet resulting in the orifice having a diffuser characteristic. The pressure on the inlet side of the orifice inlet remains higher than the pressure on the outlet side of the orifice outlet.

In another preferred embodiment, the orifice comprises at least one cylindrical orifice section stabilizing the fluid flow and ensuring that the flow speed through the orifice is not reduced too much.The diffuser characteristic of the orifice will mostly be provided by the remaining sections of the orifice.

In yet another preferred embodiment the orifice is provided in an orifice member. Arranging the orifice in an orifice member allows to connect the orifice to the membrane and gives the possibility to choose shaping for the orifice to achieve the intended diffuser characteristic. Furthermore the orifice may then move together with the membrane.

In a preferred embodiment the orifice is an integral part of the membrane. Arranging the orifice as an integral part of the membrane allows to exclude an orifice member.

In another preferred embodiment the solenoid valve comprises at least one progressive spring, wherein the valve element is forced by the at least one progressive spring. By using a progressive spring, using several springs provided in individual bores is excluded. A progressive spring may be guided within a cylindrical bore of the solenoid valve to simplify assembly of the valve. The solenoid valve can be used at higher maximum operating pressure differentials, because the spring force of the progressive spring may be low upon opening the solenoid valve and may increase when the valve member has been displaced in the fully open position and the progressive spring is compressed by a large distance. The force of the spring forcing the valve element and the valve member towards the closed position, when the coil of the solenoid valve is not provided with electric current, can still be chosen large allowing to close the valve even in case of large fluid pressures. At the same time the progressive spring provides a spring force in the open position of the solenoid valve large enough to overcome adhesion forces and forces caused by residual magnetization. If the spring force is not large enough, the valve member is prevented from closing the valve.

In a preferred embodiment, the progressive spring comprises at least two spring sections, wherein at least two of the spring sections have a different pitch. The distance between individual turns of the spring sections is different in the at least two spring sections. Furthermore, the amount of compression of the progressive spring necessary can be adjusted until the spring section with the lower pitch is fully compressed, so that the spring section with the lower pitch becomes stiff. When the spring section with the lower pitch becomes stiff, the spring constant of the progressive spring is increased, because only the remaining spring section with a larger pitch may still be compressed. Preferably, the progressive spring comprises on at least one end a spring section with compressed windings. Thereby, the progressive spring is stabilized and may exert force evenly on the member against which it abuts, as example an anchor core and/or the valve member. Alternatively, the progressive spring may have only one spring section with a variable pitch.

In a further preferred embodiment, the spring section with the lower pitch is fully compressed in the open position of the solenoid valve. The force of the progressive spring acting on the valve element may be low in the closed position of the valve, while still retaining a large force of the progressive spring on the valve element in the open position of the valve element. The progressive spring may still displace the valve element towards the closed position even against large adhesion forces and/or forces caused by residual magnetization. At the same time, the force of the progressive spring forcing the valve element onto the valve seat in the closed position will not be large.

In another preferred embodiment, the solenoid valve is a normally closed valve, wherein the valve element sealingly abuts the valve seat, when the coil of the solenoid valve is not provided with an electrical current. The solenoid valve is normally closed with the progressive spring forcing the valve element towards the valve seat when the coil of the solenoid valve is not provided with electric current.

In a further preferred embodiment, the solenoid valve comprises a substantially cylindrical valve member received slideably within the solenoid valve. Substantially cylindrical means, that the radial outer circumference of the valve member is circular over most of the length of the valve member. The valve member is preferably magnetizable and may be displaced by activating a magnetic coil to allow the opening of the valve. The valve member will interact with the valve element to displace the valve element from the valve seat towards an opening direction.

In another preferred embodiment, the progressive spring is guided in a cylindrical bore, and the cylindrical bore is provided in the valve member. Assembly of the solenoid valve is simplified. Cylindrical bore means that the bore has a constant diameter over most of length of the bore. Furthermore, the valve element may be received inside the valve member. The valve member may interact with the valve element during opening or closing the solenoid valve.

In another preferred embodiment, the solenoid valve further comprises an aperture, and the valve element is slidably received in the aperture. This aperture is preferably provided inside the valve member at an end of the valve member towards the valve seat. Furthermore a washer may be provided in the aperture abutting the valve element. The washer may be used to keep pressure on the valve element to prevent the valve element from tilting. Tilting of the valve element is a problem, if the valve element has a small height. For example, the washer may be forced towards the valve element by a support spring. Using a washer also allows a wider range of elastic materials for the valve element without the danger of the valve element being damaged by the interaction with the progressive spring. For example the valve element may consist of polytetrafluorethylene.

In a further preferred embodiment, a protrusion extends from a radially inner circumference of the aperture, and the protrusion comprises an annular ledge at the end of the aperture towards the valve seat, and the annular ledge provides a stop for the valve element. Preferably, the protrusion results in a smaller opening of the aperture than the maximum radial extension of the valve element to prevent the valve element from exiting the valve member at the end of the valve member towards the valve seat. The protrusion provides a stop for the valve element for maintaining the valve element inside the valve member when the valve element is displaced in a direction away from the valve seat. Furthermore, the protrusion allows the valve member to engage the valve element upon opening the solenoid valve. The valve element preferably comprises an annular shoulder that substantially matches the shape of the annular ledge of the valve member.

Preferably, the valve member is first displaced in a direction away from the valve seat by a stroke distance, when the coil of the solenoid valve is provided with electric current. The valve member may first be displaced a first stroke distance and gain momentum when the coil of the solenoid valve is provided with electric current before the opening of the valve starts. A first stroke distance may be obtained by displacing the valve member an additional distance compared to displacement of the valve element after the valve element has already engaged the valve seat. Preferably the stroke distance is longer than 3 mm.

Preferably, the valve member engages the valve element and displaces the valve element from the valve seat, when the valve member has been displaced the first stroke distance. The valve member already has gained momentum by being accelerated through the magnetic field over the first stroke distance. Because the progressive spring has a lower spring constant at the point of opening, the valve member is not exerting a large force on the valve element when displacing the valve element from the valve seat against the force of the progressive spring.

In another preferred embodiment, the solenoid valve comprises an anchor core. The progressive spring is abutting the anchor core. The progressive spring preferably abuts the anchor core with a spring section comprising always compressed windings. The individual windings of the spring in spring section comprising always compressed windings abut against the neighboring windings. The spring is stabilized, especially in the open position of the solenoid valve. The anchor core may furthermore be connected to a substantially cylindrical casing. The casing may also enclose the valve member and the progressive spring and the valve element. The casing may be part of the housing or be connected to the housing. The anchor core and the casing may be part of an anchor of the solenoid valve.

In another preferred embodiment, an additional end bore is provided at the end of the valve member away from the valve seat, and the additional end bore has a larger cross-sectional area than the cylindrical bore. An additional end bore simplifies insertion of different parts of the solenoid valve, for example, the progressive spring. Furthermore, the additional end bore allows controlled resting of the valve element against an anchor core.

In another preferred embodiment, the anchor core comprises an anchor protrusion abutting the additional end bore when the valve element is displaced away from the valve seat. The anchor protrusion and the additional end bore may interact to define a controlled resting position of the valve member in the opened position of the solenoid valve. Furthermore, the anchor protrusion and the additional bore may prevent the progressive spring from being compressed too much. The progressive spring being compressed too much may result in a large force of the progressive spring acting on the valve element when the coil of the solenoid valve is not provided with electric current.

In another preferred embodiment the orifice member is connected to the membrane. Connecting the orifice member to the membrane results in the orifice member being displaced together with the membrane when opening or closing the valve.

In a further preferred embodiment the membrane is plane. The membrane will be more flexible than, for example, a membrane supported by weaves. To obtain a controlled displacement of the membrane a support structure for the membrane may be provided.

In another preferred embodiment the membrane is connected to a support structure. A flexible membrane can be used and the support structure still results in a controlled displacement of the membrane and the orifice. Furthermore, the surface of the membrane exposed to the pressures in the different chambers of the solenoid valve may be adjusted, as example an inlet chamber, an outlet chamber and a servo chamber.

Preferably, the support structure comprises at least one support member connected to the orifice member. A support structure comprising at least one support member connected to the orifice member results in the orifice member displacing together with the membrane and the membrane securely connected to the orifice member.

In another preferred embodiment the support structure comprises at least one support member comprising a plurality of openings. A support member comprising a plurality of openings may preferably be next to an inlet chamber of the solenoid valve. A large area of the membrane is exposed to the high pressure from the inlet side. The support member may also be used to attach the membrane to the housing for example at a radial outer end of the membrane.

The invention also relates to a vapor compression system comprising a solenoid valve according to any of the aforementioned embodiments.

A preferred embodiment of the invention will in the following be described with reference to the figures, wherein:
Fig. 1 shows a first cut view of a preferred embodiment of a solenoid valve according to the invention,
Fig. 2 shows a second cut view of a preferred embodiment of the solenoid valve,
Fig. 3 shows a cut view of the orifice according to a preferred embodiment of the solenoid valve,
Fig. 4 shows a cut view of the progressive spring according to the invention.

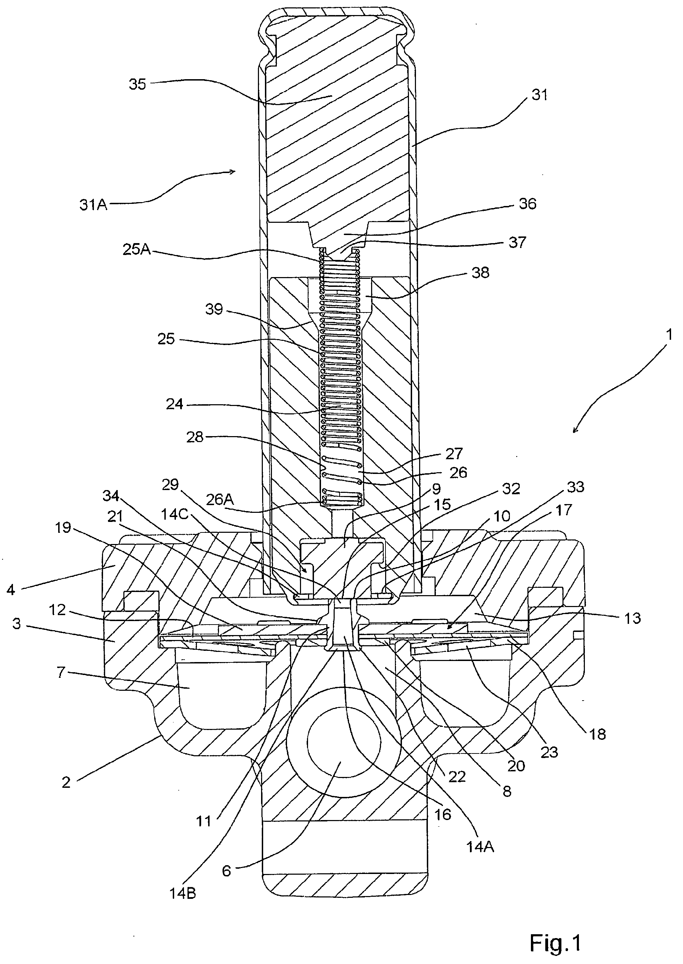

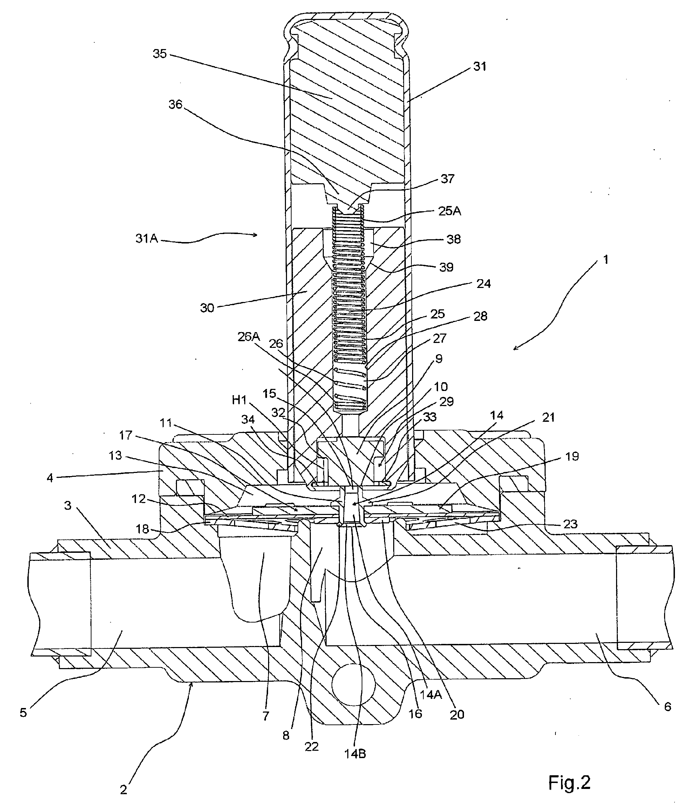

Figures 1 and 2 show a preferred embodiment of the solenoid valve 1. The figures show cut views rotated by 90° relative to each other. The solenoid valve 1 comprises a housing 2 with two housing sections 3, 4.

The solenoid valve 1 furthermore comprises an inlet 5 and an outlet 6. From the cut view of to figure 1 the inlet 5 is provided at the backside of the solenoid valve 1 and is thus not visible. The magnetic coil of the solenoid valve 1 is not shown for simplicity. In direct fluid connection to the inlet 5 an inlet chamber 7 is provided. An outlet chamber 8 is located in direct fluid contact with the outlet 6.

The solenoid valve is shown in the closed position of the valve, wherein a valve element 9 sealingly abuts the valve seat 10. The valve element 9 is preferably made from polytetrafluorethylene and comprises at least two cylindrical sections. The valve seat 10 is part of an orifice member 11. The orifice member 11 is connected to a membrane 12 separating the inlet chamber 7 from a servo chamber 13.

Within the orifice member 11 an orifice 14 is provided allowing a fluid connection between the outlet chamber 8 and the servo chamber 13 in the opened position of the solenoid valve 1.

Alternatively, an orifice member 11 may be excluded and the valve seat 10 and the orifice 14 may be constructed as integral parts of the membrane 12. The membrane may be made from polytetrafluorethylene.

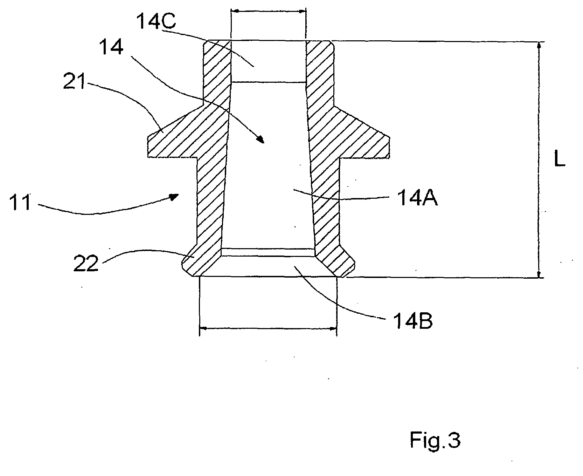

A detailed view of the orifice 14 is shown in fig. 3. The orifice 14 comprises a conical orifice section 14A and has a diffuser characteristic in a flow direction from an orifice inlet 15 to an orifice outlet 16. The conical orifice section 14A preferably extends over most of the length of the orifice L. Preferably, the walls of the conical orifice section 14A are inclined relative to a central axis of the orifice 14 by an angle of less than 10°. The orifice 14 may also comprise a conical outlet section 14B. The orifice 14 may furthermore comprise a cylindrical orifice section 14C. In particular the orifice inlet 15 has a smaller cross-sectional area than the orifice outlet 16.

The conical orifice section 14A improves the diffuser characteristic and the fluid flow speed through the orifice 14. The orifice 14 has a flow capacity comparable to cylindrical orifices with a larger inlet area used in the state of the art, but the orifice 14 increases the pressure drop over the orifice. An increase in pressure drop over the orifice allows an inlet area of the diffuser orifice to be smaller as compared to cylindrical orifices having the same pressure drop. The maximum operating pressure difference between the inlet pressure and the outlet pressure is increased, because the inlet area of the orifice is smaller. The orifice 14 may also be an integral part of the membrane 12 with the same features for an orifice 14 provided in an orifice member 11.

Referring to fig. 1 and 2, the solenoid valve 1 furthermore comprises a support structure 17 connected to the membrane 12. The support structure 17 comprises three support members 18, 19, 20. Two of the support members 19, 20 are substantially ring disc shaped and enclose the membrane 12 at least partially from the topside or the bottomside of the membrane 12. The second support member 19 is provided in fluid contact with the servo chamber 13 and is connected to the orifice member 11. The orifice member 11 comprises a first annular flange 21 that rests against the second support member 19. The orifice member 11 also comprises a second annular flange 22 and the orifice member is connected to the third support member 20. The conical outlet section 14B may thus be formed together with the second annular flange 22.

The first support member 18 is connected to the membrane 12 at the radial outer end of the membrane 12. The first support member 18 fixes the membrane 12 to the housing 2. The first support member 18 furthermore comprises a plurality of openings 23 allowing the fluid from the inlet pressure chamber 7 to reach the membrane 12 in order to exert a pressure on the membrane.

If the solenoid valve 1 is in the open position, the membrane 12 may be displaced away from the valve seat by the pressure difference between the inlet chamber 7 and the servo chamber 13. Thereby a direct fluid connection from the inlet chamber 7 to the outlet chamber 8 is established. The support structure 17 provides a controlled movement of the membrane 12.

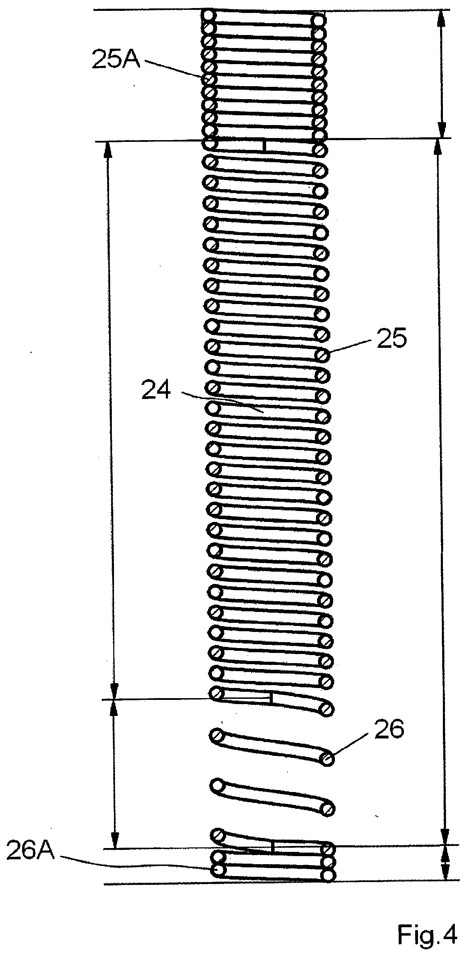

The solenoid valve 1 furthermore comprises a progressive spring 24. The progressive spring can be seen in more detail in fig. 4. The progressive spring 24 comprises four spring sections 25, 25A, 26 and 26A. On both ends of the progressive spring 24 spring sections 25A, 26A with compressed windings are provided. The two spring sections 25A, 26A are stiff and stabilize the progressive spring and provides the spring forces being applied more evenly. The progressive spring 24 also comprises two spring sections 25, 26 that are compressible and have a different pitch. The spring section 25 has a lower pitch than the spring section 26. The spring constant of the progressive spring 24 will increase when the spring section 25 with a lower pitch has been fully compressed and only the spring section 26 with a larger pitch may still be compressed.

Referring to fig. 1 and 2, the progressive spring 24 is guided in a cylindrical bore 27. The cylindrical bore 27 comprises straight sidewalls 28 along most of the length of the cylindrical bore 27. Assembly of the solenoid valve 1 is simplified, because different kinds of progressive springs may be used with the same cylindrical bore 27.

The valve element 9 is slidably provided within an aperture 29, which may be in fluid connection to the cylindrical bore 27. The valve member 9 comprises three cylindrical sections with different radii.

The solenoid valve 1 furthermore comprises a valve member 30 being magnetizable. The valve member may be moved by providing an electric current to a coil (not shown) provided radially outside the valve member 30. The valve member 30 is slideably provided within a casing 31. The casing 31 is connected to the housing 2. The casing 31 furthermore defines an anchor 31A of the solenoid valve 1. The valve element 9, the progressive spring 24 and the valve member 30 are provided inside the anchor 31 A. The valve member 30 has a substantially cylindrical shape, the radially outer circumference of the valve member is circular over most of the length of the valve member 30.

The cylindrical bore 27 and the aperture 29 are located inside the valve member 30 along the cylindrical axis of the valve member 30. The valve element 9, and the progressive spring 24 are guided within the valve member 30.

According to fig. 1 and 2 the solenoid valve 1 is shown in the normal position of the valve, the closed position. The valve element 9 sealingly abuts the valve seat 10, when the valve member 30 has been displaced by an additional stroke distance H1 beyond the valve element 9 (see fig. 2). The stroke distance H1 is defined by the distance between an annular shoulder 32 of the valve element 9 and an annular ledge 33 of the valve member 30 in the closed position of the valve. The annular ledge 33 is part of a protrusion 34 located at the end of the aperture 29 towards the valve seat 10 in the opened position of the solenoid valve 1. The protrusion 34 extends from an inner circumference of the aperture 29. The annular ledge 33 provides a stop for the valve element 9.

When electric current is provided to the coil of the solenoid valve 1, a magnetic field will be present, displacing the valve member 30 in the direction away from the valve seat 10. The valve member 30 will initially be displaced independently from the valve element 9 until the valve member 30 has been displaced by the stroke distance H1. Along the stroke distance H1 the valve member 30 will be displaced by the magnetic field and gain momentum until the annular ledge 33 meets the annular shoulder 32 of the valve element 9 and displaces the valve element 9 from the valve seat 10. Because the valve member 30 has a long stroke distance H1, the valve element 30 can gain momentum to displace the valve element from the valve seat even if the pressure difference between inlet 5 and outlet 6 is large. The maximum operating pressure difference of the solenoid valve 1 is increased compared to the state of the art. The progressive spring 24 may have a low spring constant in the closed position of the solenoid valve 1.

The spring section 25 in the closed position of the solenoid valve 1 is not fully compressed and will only become stiff, fully compressed, after the valve element 9 has already been displaced from the valve seat 10. When the spring section 25 with the lower pitch is fully compressed, the spring constant of the progressive spring 24 is larger than in the closed position of the solenoid valve 1. Forces possibly preventing the valve member 30 from displacing towards the closing position can be overcome. Forces preventing the valve member 30 from displacing may for example be forces resulting from a residual magnetization of the valve member 30 when electric current to the coil of the solenoid valve 1 is not provided or adhesion forces holding the valve member 30 to the anchor 31A.

A relatively large spring force may be maintained in the open position of the solenoid valve 1 allowing closing the valve even if the operating pressure difference between the inlet 5 and the outlet 6 is large. At the same time, the spring force of the progressive spring 24 will be low in the closed position of the solenoid valve 1.

At the end of the casing 31 away from the valve seat 10, an anchor core 35 is positioned. The anchor core 35 is substantially cylindrical and is connected to the casing 31. At the end of the anchor core 35 towards the valve seat 10, an anchor protrusion 36 is positioned. The progressive spring 24 is abutting the anchor core 35 at the anchor protrusion 36 with the help of a bulge 37.

The cylindrical bore 27 comprises an additional end bore 38 positioned at the end of the valve member 30 away from the valve seat 10. In the open position of the solenoid valve 1, the valve member 30 may rest against the anchor protrusion 36 of the anchor core 35 at the widening of the end bore 38 of the valve member 30. The additional end bore 38 comprises a tilted section 39 substantially matching the shape of the anchor protrusion 36.

## Claims

1. A solenoid valve (1) comprising a housing (2) having an inlet (5) and an outlet (6), wherein the solenoid valve (1) further comprises a valve element (9) and an orifice (14), wherein the orifice (14) comprises an orifice inlet (15) and an orifice outlet (16), and wherein the orifice (14) is provided in a membrane (12), the orifice (14) has a diffuser characteristic in a direction from the orifice inlet (15) to the orifice outlet (16), and wherein the orifice (14) comprises at least one conical orifice section (14A), and wherein the conical orifice section (14A) extends over most of the length L of the orifice (14), **characterized in that** the walls of the conical orifice section (14A) are inclined relative to a central axis of the orifice (14) by less than 10°.

2. The solenoid valve according to claim 1, **characterized in that**, the cross-sectional area of the orifice inlet (15) is smaller than the cross-sectional area of the orifice outlet (16).

3. The solenoid valve according to claims 1 or 2, **characterized in that**, the orifice (14) comprises at least one cylindrical orifice section (14C).

4. The solenoid valve according to any of claims 1 to 3, **characterized in that**, the orifice (14) comprises at least one conical outlet section (14B).

5. The solenoid valve according to any of claims 1 to 4, **characterized in that**, the orifice (14) is provided in an orifice member (11).

6. The solenoid valve according to any of claims 1 to 4, **characterized in that**, the orifice (14) is an integral part of a membrane (12).

7. The solenoid valve according to any of claims 1 to 6, **characterized in that**, the solenoid valve (1) comprises at least one progressive spring (24), wherein the valve element (9) is loaded by the at least one progressive spring (24).

8. The solenoid valve according to claim 7, **characterized in that**, the progressive spring (24) comprises at least two spring sections (25, 25A, 26, 26A), wherein at least two of the spring sections (25, 26) have a different pitch.

9. The solenoid valve according to claim 8, **characterized in that**, the spring section (25) with the lower pitch is fully compressed in the open position of the solenoid valve (1).

10. The solenoid valve according to any of claims 1 to 9, **characterized in that**, the solenoid valve (1) is a normally closed valve, wherein the valve element (9) sealingly engages the valve seat (10), when the solenoid valve (1) is not provided with an electrical current.

11. The solenoid valve according to any of claims 1 to 10, **characterized in that**, the solenoid valve (1) comprises a substantially cylindrical valve member (30) that is received slideably within the solenoid valve (1).

12. The solenoid valve according to any of claims 1 to 11, **characterized in that**, the solenoid valve (1) further comprises an aperture (29), wherein the valve element (9) is slidably received in the aperture (29).

13. The solenoid valve according to claim 12, **characterized in that**, a protrusion (34) extends from a radially inner circumference of the aperture (29), wherein the protrusion (34) comprises an annular ledge (33) at the end of the aperture (29) facing the valve seat (10), and wherein the annular ledge (33) provides a stop for the valve element (9).

14. A vapor compression system, comprising the solenoid valve according to any of claims 1 to 13.

## Patentansprüche

1. Magnetventil (1), umfassend:
ein Gehäuse (2), das einen Einlass (5) und einen Auslass (6) aufweist, wobei das Magnetventil (1) ferner ein Ventilelement (9) und eine Öffnung (14) umfasst,
wobei die Öffnung (14) einen Öffnungseinlass (15) und einen Öffnungsauslass (16) umfasst, und
wobei die Öffnung (14) in einer Membran (12) bereitgestellt ist, die Öffnung (14) ein Verteilereigenschaft in einer Richtung von dem Öffnungseinlass (15) zum Öffnungsauslass (16) aufweist, und
wobei die Öffnung (14) mindestens einen konischen Öffnungsabschnitt (14A) umfasst und wobei sich der konische Öffnungsabschnitt (14A) über die meiste Länge L der Öffnung (14) erstreckt,
**dadurch gekennzeichnet, dass** die Wände des konischen Öffnungsabschnitts (14A) in Bezug auf die zentrale Achse der Öffnung (14) um weniger als 10° geneigt sind.

2. Magnetventil nach Anspruch 1, **dadurch gekennzeichnet, dass** der Querschnittsbereich des Öffnungeinlasses (15) kleiner als der Querschnittsbereich des Öffnungsauslasses (16) ist.

3. Magnetventil nach Anspruch 1 oder 2, **dadurch gekennzeichnet, dass** die Öffnung (14) mindestens einen zylindrischen Öffnungsabschnitt (14C) umfasst.

4. Magnetventil nach einem der Ansprüche 1 bis 3, **dadurch gekennzeichnet, dass** die Öffnung (14) mindestens einen konischen Auslassabschnitt (14B) umfasst.

5. Magnetventil nach einem der Ansprüche 1 bis 4, **dadurch gekennzeichnet, dass** die Öffnung (14) in einem Öffnungselement (11) bereitgestellt ist.

6. Magnetventil nach einem der Ansprüche 1 bis 4, **dadurch gekennzeichnet, dass** die Öffnung (14) einstückig mit einer Membran (12) ausgebildet ist.

7. Magnetventil nach einem der Ansprüche 1 bis 6, **dadurch gekennzeichnet, dass** das Magnetventil (1) mindestens eine progressive Feder (24) umfasst, wobei das Ventilelement (9) durch die mindestens eine progressive Feder (24) gespannt wird.

8. Magnetventil nach Anspruch 7, **dadurch gekennzeichnet, dass** die progressive Feder (24) mindestens zwei Federabschnitte (25, 25A, 26, 26A) umfasst, wobei mindestens zwei der Federabschnitte (25, 26) eine unterschiedliche Steigung aufweisen.

9. Magnetventil nach Anspruch 8, **dadurch gekennzeichnet, dass** der Federabschnitt (25) mit der geringeren Steigung in einer offenen Position des Magnetventils (1) vollständig zusammengedrückt ist.

10. Magnetventil nach einem der Ansprüche 1 bis 9, **dadurch gekennzeichnet, dass** das Magnetventil (1) ein normalerweise geschlossenes Ventil ist, wobei das Ventilelement (9) abdichtend in den Ventilsitz (10) eingreift, wenn das Magnetventil (1) nicht mit einem elektrischen Strom bereitgestellt wird.

11. Magnetventil nach einem der Ansprüche 1 bis 10, **dadurch gekennzeichnet, dass** das Magnetventil (1) ein im Wesentlichen zylindrisches Ventilelement (30) umfasst, das verschiebbar in dem Magnetventil (1) aufgenommen ist.

12. Magnetventil nach einem der Ansprüche 1 bis 11, **dadurch gekennzeichnet, dass** das Magnetventil (1) ferner einen Durchlass (29) umfasst, wobei das Ventilelement (9) verschiebbar in dem Durchlass (29) aufgenommen ist.

13. Magnetventil nach Anspruch 12, **dadurch gekennzeichnet, dass** sich ein Vorsprung (34) von einem radial inneren Umfang des Durchlasses (29) erstreckt, wobei der Vorsprung (34) einen ringförmigen Rand (33) am Ende des Durchlasses (29) umfasst, der zum Ventilsitz (10) weist, und wobei der ringförmige Rand (33) einen Anschlag für das Ventilelement (9) bereitstellt.

14. Dampfkompressionssystem, umfassend das Magnetventil nach einem der Ansprüche 1 bis 13.

## Revendications

1. Vanne à solénoïde (1) comprenant un boîtier (2) présentant une entrée (5) et une sortie (6), dans laquelle la vanne à solénoïde (1) comprend en outre un élément de vanne (9) et un orifice (14), dans laquelle l'orifice (14) comprend une entrée d'orifice (15) et une sortie d'orifice (16), et dans laquelle l'orifice (14) est prévu dans une membrane (12), l'orifice (14) présente une caractéristique de diffuseur dans une direction partant de l'entrée d'orifice (15) vers la sortie d'orifice (16), et dans laquelle l'orifice (14) comprend au moins une section d'orifice conique (14A), et dans laquelle la section d'orifice conique (14A) s'étend sur la majeure partie de la longueur L de l'orifice (14), **caractérisée en ce que** les parois de la section d'orifice conique (14A) sont inclinées par rapport à un axe central de l'orifice (14) de moins de 10°.

2. Vanne à solénoïde selon la revendication 1, **caractérisée en ce que** la surface de section transversale de l'entrée d'orifice (15) est plus petite que la surface de section transversale de la sortie d'orifice (16).

3. Vanne à solénoïde selon la revendication 1 ou 2, **caractérisée en ce que** l'orifice (14) comprend au moins une section d'orifice cylindrique (14C).

4. Vanne à solénoïde selon l'une quelconque des revendications 1 à 3, **caractérisée en ce que** l'orifice (14) comprend au moins une section de sortie conique (14B).

5. Vanne à solénoïde selon l'une quelconque des revendications 1 à 4, **caractérisée en ce que** l'orifice (14) est pourvu d'un élément d'orifice (11).

6. Vanne à solénoïde selon l'une quelconque des revendications 1 à 4, **caractérisée en ce que** l'orifice (14) fait partie intégrante d'une membrane (12).

7. Vanne à solénoïde selon l'une quelconque des revendications 1 à 6, **caractérisée en ce que** la vanne à solénoïde (1) comprend au moins un ressort progressif (24), dans laquelle l'élément de vanne (9) est chargé par ledit au moins un ressort progressif (24).

8. Vanne à solénoïde selon la revendication 7, **caractérisée en ce que** le ressort progressif (24) comprend au moins deux sections de ressort (25, 25A, 26, 26A), dans laquelle au moins deux des sections de ressort (25, 26) présentent un pas différent.

9. Vanne à solénoïde selon la revendication 8, **caractérisée en ce que** la section de ressort (25) présentant le pas inférieur est entièrement comprimée dans la position ouverte de la vanne à solénoïde (1).

10. Vanne à solénoïde selon l'une quelconque des revendications 1 à 9, **caractérisée en ce que** la vanne à solénoïde (1) est une vanne normalement fermée, dans laquelle l'élément de vanne (9) engage de façon étanche le siège de vanne (10) lorsque la vanne à solénoïde (1) n'est pas alimentée en courant électrique.

11. Vanne à solénoïde selon l'une quelconque des revendications 1 à 10, **caractérisée en ce que** la vanne à solénoïde (1) comprend un élément de vanne sensiblement cylindrique (30) qui est reçu de façon coulissante à l'intérieur de la vanne à solénoïde (1).

12. Vanne à solénoïde selon l'une quelconque des revendications 1 à 11, **caractérisée en ce que** la vanne à solénoïde (1) comprend en outre une ouverture (29), dans laquelle l'élément de vanne (9) est reçu de façon coulissante dans l'ouverture (29).

13. Vanne à solénoïde selon la revendication 12, **caractérisée en ce qu'**une saillie (34) s'étend à partir d'un circonférence radialement intérieure de l'ouverture (29), dans laquelle la saillie (34) comprend un rebord annulaire (33) à l'extrémité de l'ouverture (29) en face du siège de vanne (10), et dans laquelle le rebord annulaire (33) fournit un arrêt pour l'élément de vanne (9).

14. Système de compression de vapeur comprenant la vanne à solénoïde selon l'une quelconque des revendications 1 à 13.
